# EUROPEAN PATENT APPLICATION

(11) **EP 4 620 830 A1**
(43) Date of publication of application: **24.09.2025**
(21) Application number: 22970027.3
(22) Date of filing: 27.12.2022
(51) Int. Cl.: B64D 45/00, B64U 10/14, G01P 5/00, G01P 13/00, B64U 101/40

(54) **WIND DETECTION SYSTEM AND UNMANNED AERIAL VEHICLE**

(71) Applicant: Kubota Corporation, Osaka 556-8601 (JP)
(72) Inventor: SEINO, Kohei, Sakai-shi, Osaka 590-0908 (JP)
(74) Representative: Cabinet Beau de Loménie
(86) International application number: PCT/JP2022/048165
(87) International publication number: WO 2024/142233

(57) **Abstract**

In an exemplary and non-limiting embodiment, a wind detection system includes a sensor to detect a first tilt angle of an unmanned aerial vehicle with respect to a first direction perpendicular to a vertical direction, and a second tilt angle of the unmanned aerial vehicle with respect to a second direction that is perpendicular to the vertical direction and intersects the first direction, and a processing device to estimate at least one of wind speed and wind direction based on sensor data output from the sensor indicating the first and second tilt angles.

## Description

### TECHNICAL FIELD

The present disclosure relates to wind detection systems and unmanned aerial vehicles.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (MultiRotor UAV) is also called a "drone", "multirotor", or "multicopter", and is widely used for applications including aerial photography, surveying, logistics, and agricultural spraying.

In the flight control of unmanned aerial vehicles, it is necessary to know the wind speed and direction in the air from a safety perspective. Additionally, since flight of unmanned aerial vehicles must be restricted when wind speed exceeds limit values, accurate measurement of wind speed in the air is required. Patent Document 1 describes a technology for estimating wind speed from a function that defines the relationship between the drag force received by the UAV from the wind and the wind speed, based on the thrust generated by the propellers obtained from control signals output from the flight controller and the tilt angle of the unmanned aerial vehicle relative to the horizontal direction.

### CITATION LIST

### PATENT LITERATURE

Patent Document No. 1: Japanese Patent Application Publication No. 2020-153792

### SUMMARY OF INVENTION

### TECHNICAL PROBLEM

There is a need for improved technology for estimating wind speed and/or direction in the air.

Unmanned aerial vehicles have different sizes depending on the type of vehicle and may have complex shapes. The present disclosure provides wind detection systems each capable of estimating wind speed and/or direction in the air regardless of the type, body size, or shape of the unmanned aerial vehicle, and also provides unmanned aerial vehicles equipped with such a wind detection system.

### SOLUTION TO PROBLEM

In an exemplary and non-limiting embodiment, the unmanned aerial vehicle of the present disclosure comprises a plurality of rotors, a sensor to detect a first tilt angle of the unmanned aerial vehicle with respect to a first direction perpendicular to a vertical direction, and a second tilt angle of the unmanned aerial vehicle with respect to a second direction that is perpendicular to the vertical direction and intersects the first direction, and a processing device to estimate at least one of wind speed and wind direction based on sensor data output from the sensor indicating the first and second tilt angles.

### ADVANTAGEOUS EFFECTS OF INVENTION

According to embodiments of the present disclosure, wind detection systems each capable of estimating wind speed and/or direction in the air regardless of the type, body size, or shape of the unmanned aerial vehicle and unmanned aerial vehicles equipped with such a wind detection system are provided.

### BRIEF DESCRIPTION OF DRAWINGS

FIG. **1A** is a block diagram schematically showing several examples of rotation drive devices to rotate rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid type multicopter.
FIG. **2C** is a block diagram showing a basic configuration example of a parallel hybrid type multicopter.
FIG. **3** is a block diagram showing a configuration example where an inertial measurement unit, a processing device, a storage device, a control device, and a communication device are connected to a bus.
FIG. **4A** is a schematic diagram for explaining a first tilt angle of a multicopter with respect to a first direction.
FIG. **4B** is a schematic diagram for explaining a second tilt angle of a multicopter with respect to a second direction.
FIG. **5** is a diagram showing an example of a table.
FIG. **6** is a diagram for explaining wind directions.
FIG. **7** is a side view schematically showing one example of a basic configuration of a multicopter equipped with a connecting mechanism.
FIG. **8A** is a schematic diagram showing a multicopter hovering in the air with an object suspended from it.
FIG. **8B** is a schematic diagram showing another view of a multicopter hovering in the air with an object suspended from it.
FIG. **9** is a diagram showing an example of a table defining the relationship between a third tilt angle, tension, and wind speed around the object.
FIG. **10** is a schematic diagram showing how the horizontal distance of material spread from a spreader changes according to wind speed.
FIG. **11** is a schematic diagram showing an example where a multicopter, an agricultural machine, a server, and a terminal device are connected via a communication network.

### DESCRIPTION OF EMBODIMENTS

Unmanned aerial vehicles each equipped with a plurality of rotors include a rotation drive device to rotate the rotors (hereinafter referred to as "propellers"). Hereinafter, such an unmanned aerial vehicle is referred to as a "multicopter".

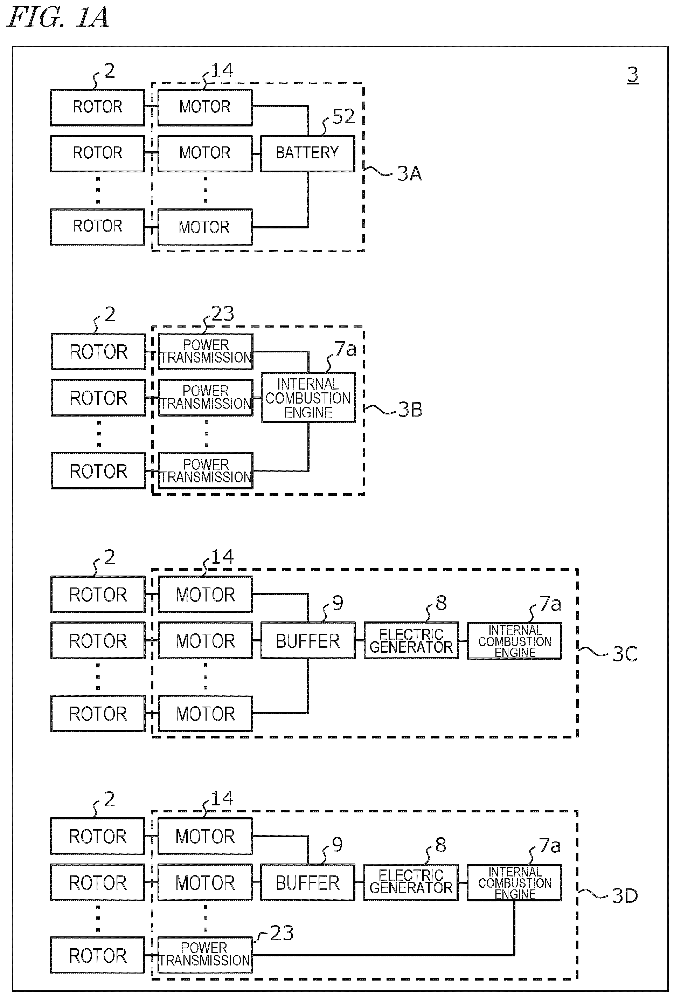

The configuration of rotation drive devices equipped in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer 9 that stores electric power to be supplied to each motor **14,** an electric generator **8** such as an alternator that generates electric power, and an internal combustion engine **7a** that provides mechanical energy for power generation to the electric generator **8.** While a typical example of power buffer 9 is a battery such as a secondary battery, it may also be a capacitor. In the **third** rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator 8 and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, and a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motors **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

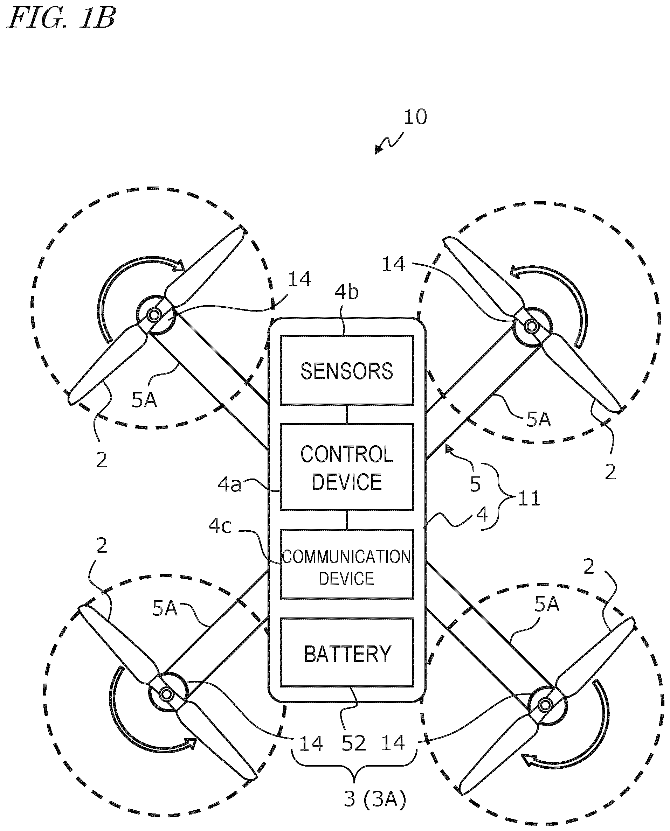

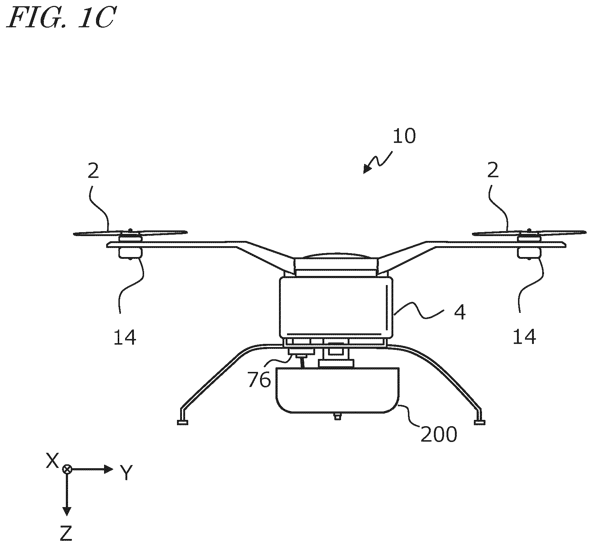

FIG. **1B** is a plan view schematically showing a basic configuration example of multicopter **10.** The configuration example in FIG. **1B** includes the first rotation drive device **3A** shown in FIG. **1A** as rotation drive device **3.** That is, in this example, rotation drive device **3 (3A)** includes motors **14** and a battery **52.** FIG. **1C** is a side view schematically showing the multicopter.

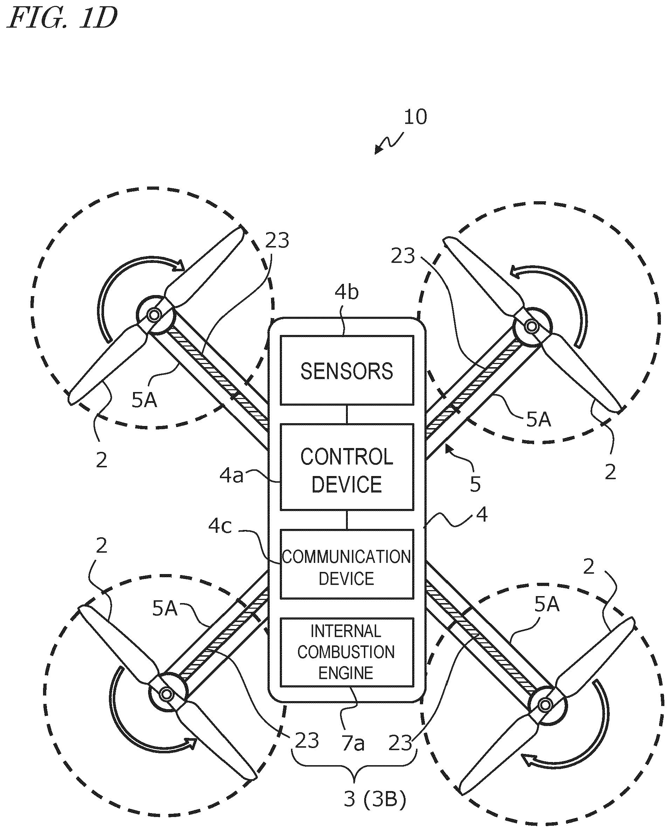

The multicopter **10** shown in FIGs. 1**B and 1C** includes a plurality of rotors **2,** a main body **4,** and a body frame **5** that supports rotors **2** and main body **4.** The body frame **5** supports the main body **4** at its central portion and supports the plurality of rotors **2** rotatably with a plurality of arms **5A** extending outward from the central portion. The motors **14** that rotate rotors **2** are provided near the ends of each arm **5A.**

In the example of FIG. **1B****,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** that controls the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, an angular velocity sensor, a geomagnetic sensor, an atmospheric pressure sensor, an altitude sensor, a temperature sensor, a flow sensor, an imaging device, a laser sensor, an ultrasonic sensor, an obstacle contact sensor, and a GNSS (Global Navigation Satellite System) receiver. The acceleration sensor and angular velocity sensor may be mounted on the main body **4** as components of an IMU (Inertial Measurement Unit). Examples of laser sensors may include a laser range finder used to measure distance to the ground, and 2D or 3D LiDAR.

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute some or all of the functions of the companion computer.

A battery **52** is a secondary battery that is configured to store electric power through charging and supply electric power to the motors **14** through discharging. Through the operation of battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors 2. The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned more inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** includes a plurality of motors **14.** As mentioned above, the rotation drive device **3** may include the internal combustion engine **7a.**

FIG. **1D** is a plan view schematically showing a basic configuration example of a multicopter **10** equipped with the second rotation drive device **3B.** In the example shown in FIG. **1D****,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.**

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used to rotate the main rotors and the motors **14** may be used to rotate the sub-rotors. In such case, the main rotors are mainly used to generate thrust, and the sub-rotors are used for both generating thrust and attitude control. The main rotors may be called "booster rotors" and the sub-rotors may be called "attitude control rotors".

In the parallel hybrid drive, the internal combustion engine **7a** is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine **7a** and uses the internal combustion engine **7a** for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt a parallel hybrid driver or a series hybrid driver to increase payload and flight duration.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers to spray chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of spreading substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. Additionally, if the implement **200** is equipped with space large enough to store materials, the implement **200** can also transport agricultural materials or harvested crops over a wide area.

In the example shown in FIG. **1C****,** the multicopter **10** is equipped with power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power.

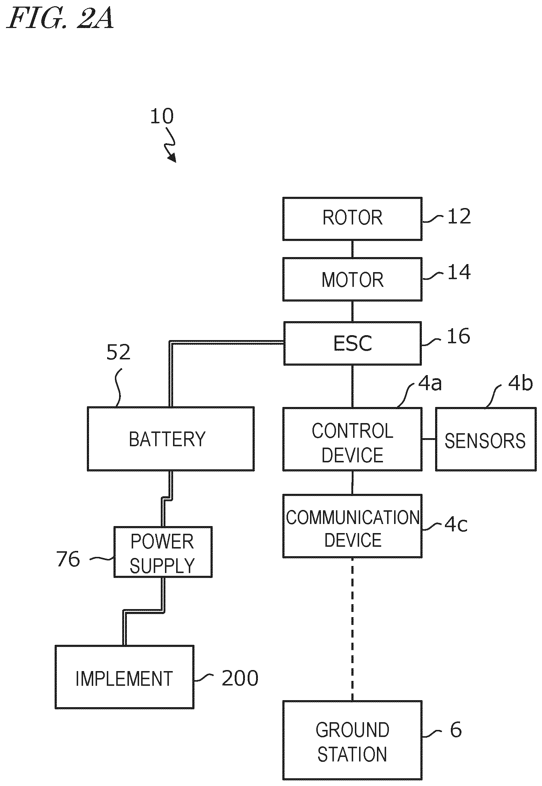

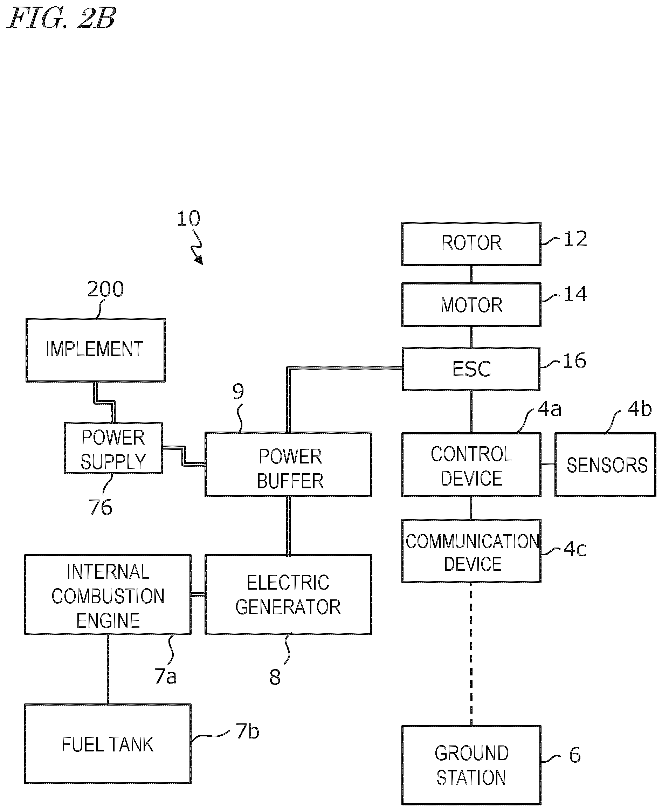

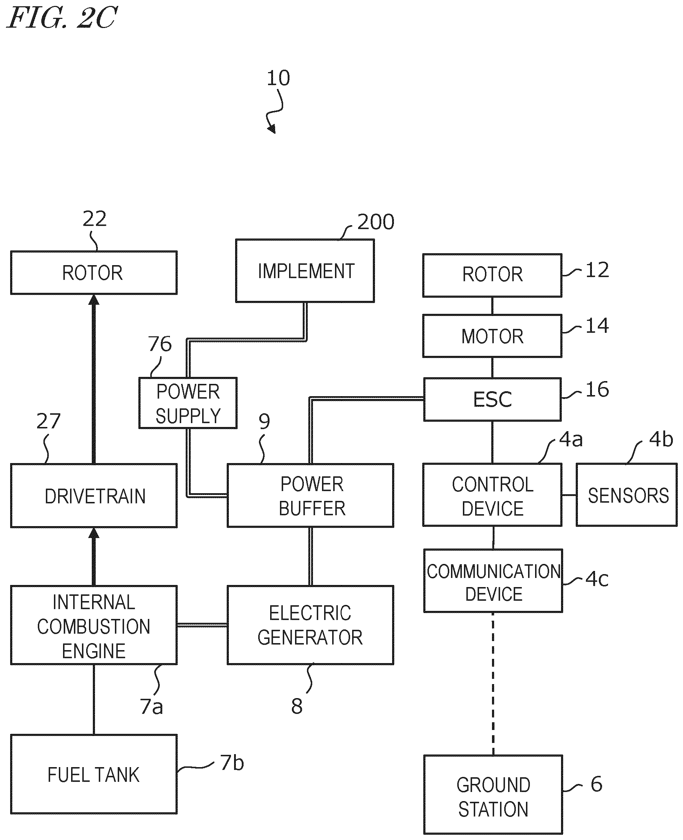

FIG. **2A** is a block diagram showing a basic configuration example of a battery-driven multicopter **10.** The battery-driven multicopter **10** includes a plurality of rotors **12, a** plurality of motors **14** each rotating a respective one of the plurality of rotors **12,** a plurality of ESCs (Electric Speed Controllers) **16** each including a motor drive circuit that drives a respective one of the plurality of motors **14,** a battery **52** that supplies power to each of the motors **14** through respective ESCs **16,** a control device **4a** for controlling a plurality of ESCs **16** to control attitude while flying, sensors **4b,** a communication device **4c,** and a power supply 76 that is electrically connected to the battery **52.** Rotor **12** is an example of rotor **2.** Devices such as the control device **4a,** sensors **4b,** communication device **4c,** etc., may be connected to each other through a CAN (Controller Area Network) bus to enable communication. In FIG. **2A****,** for simplicity, the rotor **12,** the motor **14,** and the ESC **16** are each shown by a single block, but the numbers of rotors **12,** motors **14,** and ESCs **16** are each plural. This also applies to Figs. **2B** and **2C****.**

The control device **4a** may receive control commands wirelessly from, for example, a ground station **6** on the ground through the communication device **4c.** The number of ground stations 6 is not limited to one, and they may be distributed across multiple locations. The communication device **4c** may also wirelessly receive control commands from an operator's control device on the ground. The control device **4a** may have functions to automatically or autonomously execute takeoff, flight, obstacle avoidance, and landing operations based on sensor data obtained from the sensors **4b.**

The control device **4a** may be configured to communicate with the implement **200** connected to power supply **76** and obtain signals indicating the state of the implement **200** from the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b that** stores fuel for the internal combustion engine **7a,** an electric generator **8** that is driven by the internal combustion engine **7a to** generate electric power, a power buffer **9** that temporarily stores electric power generated by the electric generator **8, and** a power supply **76** that is electrically connected to the power buffer **9.** The power buffer **9 is,** for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and rotor **22** to rotate upon the receiving driving force from the internal combustion engine **7a** through the drivetrain **27.** Rotor **22** is an example of rotor **2.** The number of rotors **22** connected to the drivetrain **27** and rotated may be one or two or more.

In the parallel hybrid drive type multicopter **10,** the internal combustion engine **7a** not only drives the electric generator **8 to** generate power but also mechanically transmits energy to rotor **22** to rotate the **rotor 22.** In contrast, in the series hybrid drive type multicopter **10,** all rotors **12** are rotated by electric power generated by the electric generator **8.** Therefore, in the series hybrid drive type multicopter **10,** if the electric generator **8** is, for example, a fuel cell, then the internal combustion engine **7a** is not an essential component.

A wind detection system suitable for use with multicopters is described as follows.

A wind detection system according to embodiments of the present disclosure is configured to estimate at least one of wind speed and wind direction based on the tilt of the multicopter with respect to each of a plurality of directions that intersect each other in the same horizontal plane perpendicular to the vertical direction.

Conventionally, anemometers have been used to measure wind speed. With the increasing frequency of abnormal weather events such as storms and heavy rainfall, there is a demand for measuring weather conditions such as wind speed, wind direction, temperature, and humidity at more ground locations. It is possible to estimate wind speed in the air based on wind speed measured by ground-installed anemometers, but the actual wind speed in the air may differ from such estimated wind speed.

As disclosed in Patent Document 1, instead of using an anemometer, wind speed can be estimated from a function that defines the relationship between the wind force received by the multicopter and the wind speed. However, as mentioned earlier, there are various types of multicopters, and therefore, the shape of the body can become complex depending on the type or application. Consequently, the wind force received by such a multicopter body differs at the front, rear, left, and right sides. The more complex the body shape becomes, the more difficult it becomes to estimate wind speed based on the tilt of the multicopter with respect to a single horizontal direction. The shape of the body is expected to become increasingly complex in the future, and it is desirable to accurately estimate wind speed and/or direction in the air regardless of the body shape and size.

According to wind detection systems of embodiments of the present disclosure, even if the body shape becomes complex, wind speed and/or direction can be estimated in real-time based on the tilt of the multicopter with respect to each of a plurality of directions that intersect each other in the same horizontal plane perpendicular to the vertical direction. For example, it is possible to estimate an agrochemical application status of agricultural chemicals dispersed from the air based on wind speed and direction, enabling efficient agrochemical application work by multicopters. Estimation of the agrochemical application status will be described later.

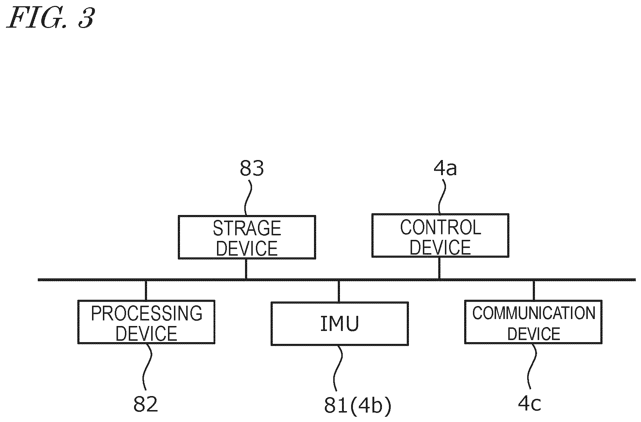

FIG. **3** **is** a block diagram showing a configuration example where an IMU **81 (4b),** a processing device **82, a** storage device **83, a** control device **4a,** and a communication device **4c** are connected to a bus. These devices are connected to each other through, for example, a CAN bus to enable communication.

A wind detection system according to embodiments of the present disclosure includes a sensor **81** and a processing device **82 that** processes sensor data output from the sensor **81.** For example, the sensor **81** and the processing device **82** may be modularized as a wind detection system. Such a module may be manufactured and sold independently of the multicopter and can also be attached later to existing multicopters.

The multicopters according to embodiments of the present disclosure are not limited to a quad-type multicopter but may be, for example, a hexa-type multicopter (hexacopter) equipped with six rotors, or an octo-type multicopter (octocopter) equipped with eight rotors.

The sensor **81** is configured to detect a first tilt angle of the multicopter with respect to a first direction perpendicular to the vertical direction, and a second tilt angle of the multicopter with respect to a second direction that is perpendicular to the vertical direction and intersects the first direction. The sensor **81** may further be configured to detect a rotation angle of the multicopter around an axis parallel to the vertical direction. Examples of sensor **81** include an IMU, an acceleration sensor, an angular velocity sensor, or a combination of an acceleration sensor and an angular velocity sensor. In embodiments of the present disclosure, the sensor **81** is an IMU. The IMU functions as a motion sensor and can output signals indicating quantities such as acceleration, velocity, displacement, and attitude of the multicopter.

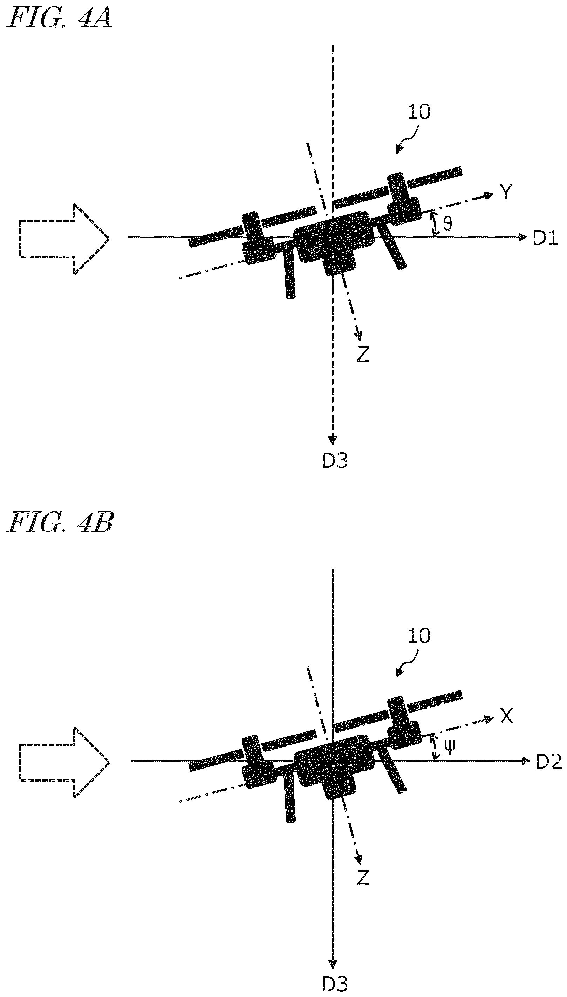

FIG. **4A** is a schematic diagram for explaining a first tilt angle θ of multicopter **10** with respect to a first direction **D1.** FIG. **4B** is a schematic diagram for explaining a second tilt angle Ψ of multicopter **10** with respect to a second direction **D2.** In the examples shown in FIGs. **4A** and **4B****,** the first, second, and third directions **D1-D3** are mutually perpendicular. The first and second directions **D1, D2** are each horizontal directions, and the third direction **D3** is the vertical direction. The first direction **D1** is perpendicular to the third direction **D3.** The second direction **D2** is perpendicular to both the first and third directions **D1, D3.** Thus, the first and second directions **D1, D2** are mutually perpendicular in the same horizontal plane perpendicular to the third direction **D3.** However, the first and second directions **D1, D2** need not be perpendicular to each other, as long as they intersect in the same horizontal plane.

FIGS. **4A** and **4B** show an orthogonal coordinate system with X, Y, and Z axes corresponding to the roll axis, pitch axis, and yaw axis fixed to the multicopter **10.** FIG. **1B****,** **1C****,** or **1D** shows an example of roll, pitch, and yaw axes fixed to the multicopter **10.** Rotation of the multicopter **10** around the X axis is roll, rotation around the Y axis is pitch, and rotation around the Z axis is yaw. The sensor **81** has this orthogonal coordinate system and is capable of detecting rotation angles around the X, Y, and Z axes, that is, roll angle, pitch angle, and yaw angle.

FIG. **4A** illustrates an example of a multicopter **10** hovering while receiving wind from the left side of the figure and rotating clockwise by angle θ around the X axis (roll axis). The sensor **81** detects the first tilt angle θ of the multicopter **10** with respect to the first direction **D1,** as shown in FIG. **4A****.** The first tilt angle θ is represented by the angle between the first direction **D1** and the Y axis (pitch axis). In other words, the first tilt angle θ is defined by the roll angle of the multicopter **10.**

FIG. **4B** illustrates an example of a multicopter **10** hovering while receiving wind from the left side of the figure and rotating clockwise by angle Ψ around the Y axis (pitch axis). The sensor **81** detects the second tilt angle Ψ of the multicopter **10** with respect to the second direction **D2,** as shown in FIG. **4B****.** The second tilt angle Ψ is represented by the angle between the second direction **D2** and the X axis (roll axis). In other words, the second tilt angle Ψ is defined by the pitch angle of the multicopter **10.**

When the wind force received by the multicopter **10** and the horizontal component of the thrust of the multicopter **10** (the sum of the thrust generated by each rotating rotor **2)** are in balance, the multicopter **10** can stop in the air, that is, hover. As the wind force increases, the multicopter **10** tilts more to increase the horizontal component of thrust. In this way, the forces in the horizontal direction are balanced. Furthermore, by increasing the thrust, the weight of the multicopter **10** and the vertical component of the thrust are balanced, thereby maintaining the hovering state of the multicopter **10.** Such control is achieved by PID control performed by a flight control device such as a flight controller. Note that the wind force is unknown to the flight control device, and the flight control device does not perform control that takes wind force into account. The flight control device controls the multicopter **10** to remain stationary at its current position based on longitude, latitude, and altitude information included in the position information obtained by, for example, a GNSS receiver.

An example of the processing device **82** is a processor. The processor is one or more semiconductor integrated circuits, also referred to as a central processing unit (CPU) or microprocessor. The processor sequentially executes computer programs stored in storage device **83** to implement the processes described later. The term processor is broadly interpreted to encompass devices such as FPGA (Field Programmable Gate Array) with CPU, GPU (Graphic Processor Unit), ASIC (Application Specific Integrated Circuit), or ASSP (Application Specific Standard Product).

The processing device **82** estimates at least one of wind speed and wind direction based on sensor data output from the sensor **81** indicating the first and second tilt angles θ, Ψ. In embodiments of the present disclosure, the processing device **82** estimates at least one of wind speed and wind direction by referring to a table (lookup table: LUT) from the first and second tilt angles θ, Ψ detected by the sensor **81.**

As mentioned earlier, the wind force is unknown to the flight control device. However, there is a one-to-one relationship between the wind speed (or wind force) and the first and second tilt angles θ, Ψ detected by the sensor **81.** Therefore, if the first and second tilt angles θ, Ψ are determined, the wind speed can be estimated from these angles. Furthermore, as a result, the multicopter **10** eventually tilts toward the windward side, so the processing device **82** can determine the wind direction from the direction in which the multicopter **10** tilts. For example, the processing device **82** can estimate the wind direction from the attitude represented by the roll angle, pitch angle, and yaw angle detected by the sensor **81.** In other words, the processing device **82** can estimate the wind direction from the first tilt angle θ, the second tilt angle **Ψ,** and the yaw angle.

Some of the functions of the processing device **82** may be implemented in the companion computer mentioned earlier. Alternatively, the companion computer may function as the processing device **82.** In this case, the companion computer estimates at least one of wind speed and wind direction based on sensor data output from the sensor **81** indicating the first and second tilt angles θ, Ψ. Furthermore, an external computer (for example, a server device) may function as the processing device **82.**

The multicopter according to embodiments of the present disclosure may further include a storage device **83** that stores a table, as shown in FIG. **3****.** The storage device **83** may store a table that defines the relationship between the first tilt angle θ, the second tilt angle Ψ, and at least one of wind speed and wind direction.

The storage device **83** is, for example, a writable memory (e.g., PROM), a rewritable memory (e.g., flash memory), or a read-only memory (ROM). The storage device **83** may store a program that controls the operation of the processing device **82.** The storage device **83** need not be a single recording medium but may be a collection of multiple recording media. Some portions of the collection may be removable memory.

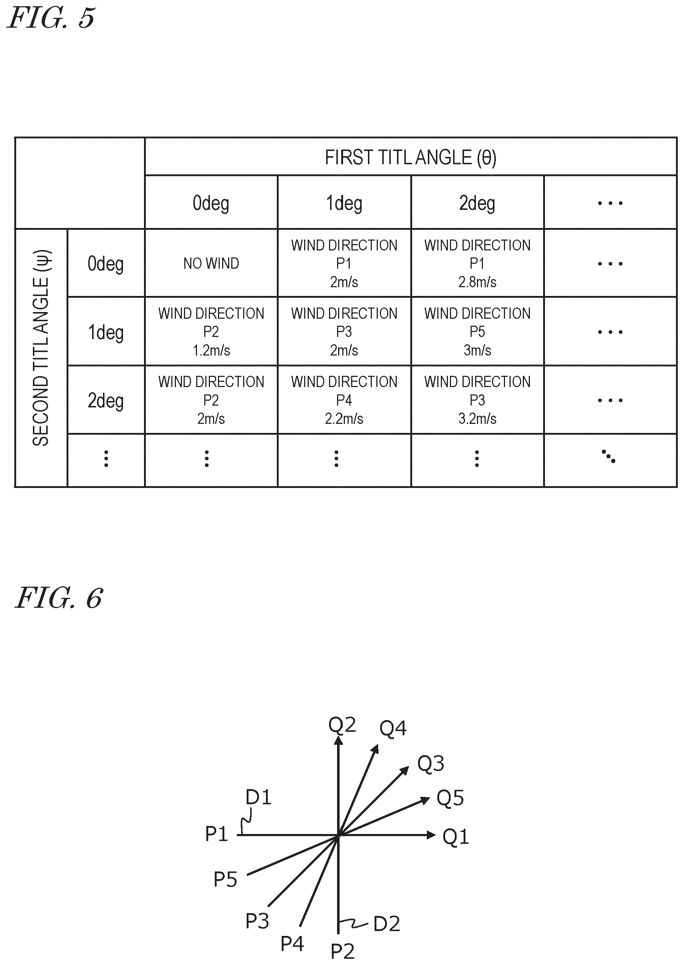

FIG. **5** is a diagram showing an example of a table. FIG. **6** is a diagram for explaining wind directions. The table exemplified in FIG. **5** defines the correspondence relationship between the first tilt angle θ, the second tilt angle Ψ, and wind speed and wind direction. This table may vary depending on the type of multicopter. More specifically, this table may vary depending on the shape and size of the multicopter's body. In this way, the storage device **83** stores a table corresponding to the shape and size of the multicopter's body, that is, a table corresponding to the shape and size of its own body.

If the shape and size of the multicopter's body are known, it is possible to estimate wind speed from wind force. The relationship between wind speed and wind force depends on which direction the wind hits the body of the multicopter. For example, the wind force received by the body varies at the front, rear, left, and right sides of the body, which may each have different sizes, depending on the wind direction. The relationship between wind speed and wind force can be obtained by conducting experiments or simulations where wind of different speeds is applied to the multicopter from various directions in a wind tunnel, and the wind force is measured. The table may be determined based on experimental or simulation results.

When the communication device **4c** receives a signal requesting wind speed, etc., from a control device or the like that operates the multicopter, the processing device **82** may transition to a mode to estimate at least one of wind speed and wind direction (estimation mode). When the processing device **82** transitions to the estimation mode, it may transition to automatic hovering control instead of executing flight control according to operation signals from the control device. When the processing device **82** transitions to hovering control in the estimation mode, it estimates wind speed, etc., by referring to the first tilt angle θ, the second tilt angle Ψ, and the table shown in FIG. **5** during hovering. The release of the estimation mode, that is, the transition from the estimation mode to the normal flight mode, may be executed when the communication device **4c** receives a release signal transmitted from the control device, or the estimation mode may be automatically released after a predetermined time has elapsed since the start of the estimation mode.

According to the example of the table shown in FIG. **5****,** the processing device **82** estimates that there is no wind at the measurement spot if both the first tilt angle θ and the second tilt angle Ψ are zero.

The processing device **82** estimates the wind speed to be 2 m/s if the second tilt angle Ψ is zero and the first tilt angle θ is 1°. The processing device **82** estimates the wind speed to be 2.8 m/s if the second tilt angle Ψ is zero and the first tilt angle θ is 2°. The processing device **82** further estimates that the wind is blowing from the starting point **P1** toward the endpoint **Q1** as shown by the arrow in FIG. **6****.** This wind direction is called wind direction **P1.** The wind direction **P1** corresponds to the direction of the arrow indicating the first direction **D1,** for example, wind blowing from the west.

The processing device **82** estimates the wind speed to be 1.2 m/s if the first tilt angle θ is zero and the second tilt angle Ψ is 1°. The processing device **82** estimates the wind speed to be 2 m/s if the first tilt angle θ is zero and the second tilt angle Ψ is 2°. The processing device **82** further estimates that the wind is blowing from the starting point **P2** toward the endpoint **Q2** as shown by the arrow in FIG. **6****.** This wind direction is called wind direction **P2.** The wind direction **P2** corresponds to the direction of the arrow indicating the second direction **D2,** for example, wind blowing from the south.

The processing device **82** estimates the wind speed to be 2 m/s if the first tilt angle θ is 1° and the second tilt angle Ψ is 1°. The processing device **82** estimates the wind speed to be 3.2 m/s if the first tilt angle θ is 2° and the second tilt angle Ψ is 2°. The processing device **82** further estimates that the wind is blowing from the starting point **P3** toward the endpoint **Q3** as shown by the arrow in FIG. **6****.** This wind direction is called wind direction **P3.** The wind direction **P3** is, for example, wind blowing from the southwest.

The processing device **82** estimates the wind speed to be 2.2 m/s if the first tilt angle θ is 1° and the second tilt angle Ψ is 2°. The processing device **82** further estimates that the wind is blowing from the starting point **P4** toward the endpoint **Q4** as shown by the arrow in FIG. **6****.** This wind direction is called wind direction **P4.** The wind direction **P4** is, for example, wind blowing from the south-southwest.

The processing device **82** estimates the wind speed to be 3 m/s if the first tilt angle θ is 2° and the second tilt angle Ψ is 1°. The processing device **82** further estimates that the wind is blowing from the starting point **P5** toward the endpoint **Q5** as shown by the arrow in FIG. **6****.** This wind direction is called wind direction **P5.** The wind direction **P5** is, for example, wind blowing from the west-southwest.

In the embodiment described above, the processing device **82** transitioned to the estimation mode triggered by the communication device **4c** receiving a signal requesting wind speed, etc., from a control device. However, as an alternative, the processing device **82** may automatically transition to the estimation mode when the operation signal from the control device indicates to execute hovering.

The wind speed and wind direction estimated by the multicopter may be transmitted from the communication device **4c** to a control device, a mobile terminal, server, etc., and may be displayed on the monitor of the control device, the monitor of the mobile terminal, the monitor of a computer accessing the server, etc.

Thus, according to the multicopter of embodiments of the present disclosure, even in locations where no anemometer is installed on the ground, wind speed and wind direction can be appropriately estimated at a measurement spot in the air, thereby enabling the acquisition of meteorological data such as wind speed and wind direction at more measurement spots. This makes it possible to perform detailed flight control of the multicopter considering wind speed and wind direction, enabling safe flight of the multicopter.

When wind speed exceeds a limit value, the flight of the multicopter must be restricted. By estimating the wind speed in the air at the measurement spot, if the estimated wind speed exceeds the limit value, or if the sum of the wind speed and the movement speed of the multicopter due to a tailwind exceeds the limit value, the processing device may send a command to the control device to make the multicopter perform operations such as descending in altitude or landing. This can improve safety in emergency situations.

In embodiments of the present disclosure, a combination of an IMU and a processing device functions as an anemometer instead of a conventional anemometer. By mounting, for example, a thermometer, barometer, and hygrometer on the multicopter, it becomes possible to collect data useful for weather forecasting, such as wind speed, wind direction, atmospheric pressure, temperature, and humidity. In other words, a multicopter equipped with an anemometer, a barometer, a thermometer, and a hygrometer is provided.

The multicopter according to embodiments of the present disclosure may further include a connecting mechanism to suspend an object.

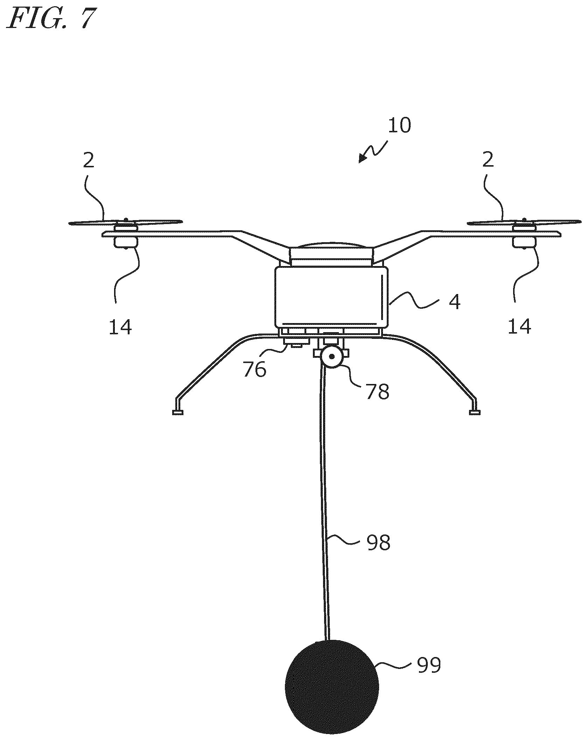

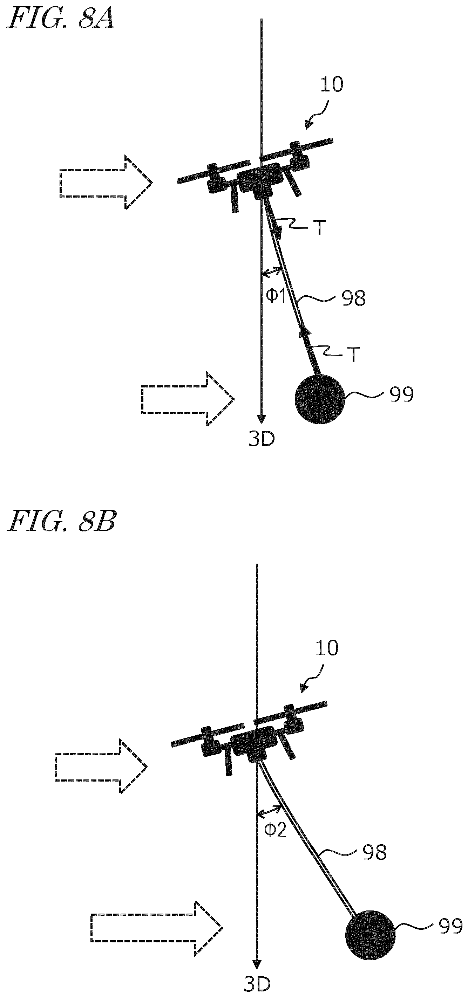

FIG. **7** is a side view schematically showing one example of a basic configuration of a multicopter **10** equipped with a connecting mechanism **78.** FIGs. **8A** and **8B** are schematic diagrams showing the multicopter **10** hovering in the air with an object **99** suspended from it.

The multicopter **10** exemplified in FIG. **7** includes a connecting mechanism **78** to suspend an object **99** via a working rope **98.** The connecting mechanism **78** enables winding and unwinding of the working rope **98.** The connecting mechanism **78** makes it possible to adjust the length of the working rope **98.**

The processing device **82** may estimate the wind speed around the object **99** according to the movement of the object **99** as it receives wind force when the multicopter **10** is in the air with the object **99** suspended from the connecting mechanism **78.** For example, the processing device **82** obtains a third tilt angle φ when the multicopter **10** is in the air with the object **99** suspended from the connecting mechanism **78,** and estimates the wind speed around the object **99** based on the third tilt angle φ. The third tilt angle φ is the tilt angle of the working rope **98** (or object **99)** with respect to the vertical direction (third direction **D3),** as shown in FIG. **8A** or FIG. **8B****.**

Wind speed and wind direction near the ground may differ from wind speed and wind direction in the air. By suspending an object **99** from the multicopter **10,** it becomes possible to estimate not only wind speed and wind direction in the air but also wind speed and wind direction near the ground.

In the example shown in FIG. **8A****,** the wind force received by the object **99** is relatively small, and in the example shown in FIG. **8B****,** the wind force received by the object **99** is relatively large. In this case, the third tilt angle φ1 shown in FIG. **8A** is smaller than the third tilt angle φ2 shown in FIG. **8B****.** The horizontal component of the tension **T** shown in FIG. **8A** is balanced with the wind force received by the object **99.** Therefore, if the third tilt angle φ and the tension **T** are determined, it is possible to estimate the wind speed around the object **99** from them. For example, the multicopter **10** may include a measuring instrument to measure the tension **T.** An example of the measuring instrument is a spring scale. An acceleration sensor to measure the third tilt angle **φ** and a communication device may be provided on the object **99.** The communication device **4c** of the multicopter **10** can communicate with this communication device, for example, via a network, and the processing device **82** can obtain sensor data indicating the third tilt angle φ output from the acceleration sensor. The processing device **82** can estimate the wind speed around the object **99** based on the third tilt angle φ and the tension **T.**

The table mentioned earlier may further define the relationship between the first tilt angle θ, the second tilt angle Ψ, the third tilt angle φ, the wind speed around the multicopter, and the wind speed around the object. The relationship between the first tilt angle θ, the second tilt angle Ψ, and the wind speed around the multicopter is as described with reference to FIG. **5****.** That is, the processing device **82** can estimate the wind speed around the multicopter by referring to the table as shown in FIG. **5** from the first tilt angle θ and the second tilt angle Ψ.

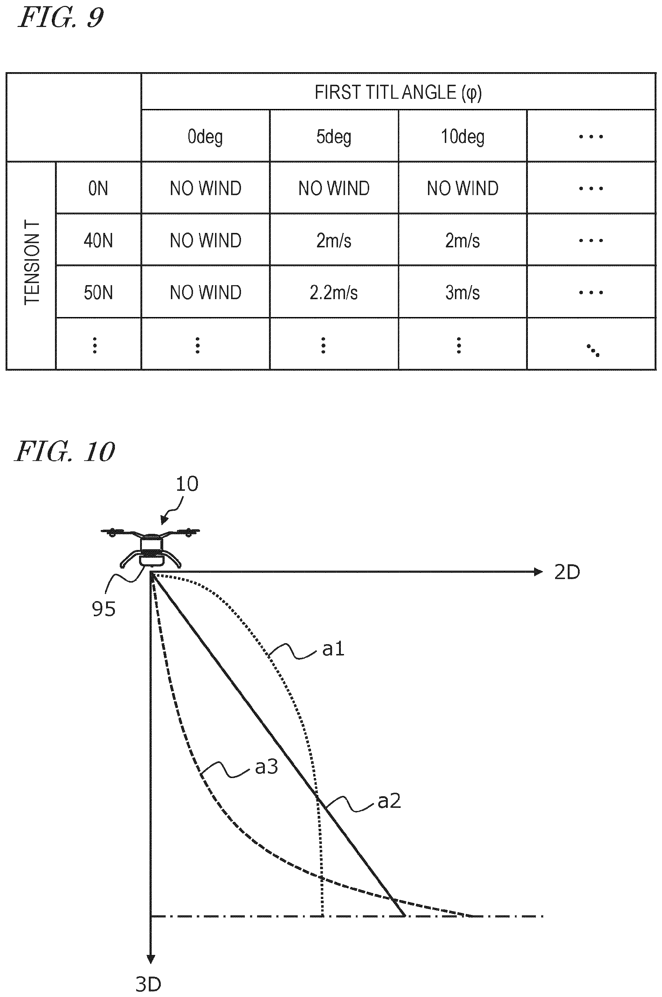

FIG. **9** is a diagram showing an example of a table defining the relationship between the third tilt angle φ, tension **T,** and wind speed around the object. The processing device **82** may estimate the wind speed around the object by referring to the table from the third tilt angle φ and the tension **T.** This table may vary depending on the shape and size of the object **99.** The relationship between wind speed and wind force can be determined from experiments or simulations as described earlier.

The multicopter according to embodiments of the present disclosure may further include an applicator **95** (see FIG. **10****)** for applying, onto the ground, agricultural materials (hereinafter simply referred to as "materials") in granular or liquid form. Examples of materials include liquid agents or granular agents such as herbicides or insecticides, water, and seeds. The processing device **82** can determine the wind speed around the multicopter (or in the air) and the wind speed around the object (or near the ground) from the first tilt angle θ, the second tilt angle Ψ, and the third tilt angle φ by referring to tables exemplified in FIGS. **5** and **9****.** The processing device **82** may further estimate the agricultural material application status from the determined wind speed in the air and the wind speed near the ground.

The object **99** may be a balloon formed from, for example, rubber, polymer resin, or fiber, containing gas inside. The multicopter according to embodiments of the present disclosure may include a storage compartment for storing a deflated balloon. To avoid interfering with the distribution of materials, for example, after the connecting mechanism winds up the working rope, gas may be released from the balloon to deflate it, and the deflated balloon may be stored in the storage compartment. Alternatively, the spreader may be mounted on a separate multicopter from the one measuring wind speed and direction, and the two multicopters may work together to perform spreading operations.

The object **99** itself may be a applicator. For example, while the multicopter **10** ascends vertically to reach the altitude to start dispersing, the processing device **82** may estimate the wind speed around the spreader at more measurement spots at different altitudes. Since data on wind speed can be obtained over a wide range from near the ground to high points in the air, the accuracy of estimating the agricultural material application status can be improved by utilizing the data obtained in this way.

FIG. **10** is a schematic diagram showing how the horizontal distance over which materials dispersed from the applicator **95** are scattered changes according to wind speed. In FIG. **10****,** the horizontal axis represents the horizontal distance from the multicopter **10,** and the vertical axis represents the vertical distance from the multicopter **10.** The chain line indicates the ground.

The dotted line **a1** in FIG. **10** shows an example of a predicted agricultural material application status **A1** when the wind speed in the air is relatively high and the wind speed near the ground is relatively low. The solid line **a2** in FIG. **10** shows an example of a predicted agricultural material application status **A2** when the wind speed in the air and the wind speed near the ground are equal. The dashed line **a3** in FIG. **10** shows an example of a predicted agricultural material application status **A3** when the wind speed in the air is relatively low and the wind speed near the ground is relatively high. Of course, the agricultural material application status varies depending on the type of material and may also vary depending on the weight and shape of the material.

Comparing the reaching distance of materials in the horizontal direction on the ground in the example shown in FIG. **10****,** the scattering distance in the agricultural material application status **A3** is the largest, and the scattering distance in the agricultural material application status **A1** is the smallest. In this way, the processing device **82** can estimate the agricultural material application status from the wind speed in the air and the wind speed near the ground. Additionally, in dispersing operations, the dispersing direction of materials can be adjusted in real-time by controlling, for example, the angle of the nozzle that the applicator **95** has, based on the estimated wind speed and wind direction. This enables efficient dispersing operations.

Systems providing various functions in the embodiments can also be attached later to multicopters that do not have those functions. Such systems may be manufactured and sold independently of the multicopter. Computer programs used in such systems may also be manufactured and sold independently of the multicopter. Computer programs may be provided, for example, stored on a non-transitory computer-readable storage medium. Computer programs may also be provided through downloads via telecommunications lines (e.g., the Internet).

In the embodiments described above, wind speed and/or wind direction are estimated during hovering, but the multicopter **10** may estimate wind speed and/or wind direction not only during hovering but also during flight. A flying multicopter receives air resistance from the front in the direction of travel. As a result, under the same wind speed and wind direction conditions, the attitude of a flying multicopter differs from the attitude of a multicopter in a windless state. During flight of the multicopter, the flight control device controls the attitude of the multicopter so that the horizontal component of thrust is balanced with the combined force of the horizontal component of wind force and the horizontal component of air resistance. It is preferable for the processing device **82** to correct the wind speed estimated by referring to a table according to the flight speed during flight of the multicopter **10.** Similar to the relationship between wind speed and wind force, the relationship between flight speed and air resistance can also be determined from experiments or simulations. For example, a table associating flight speed with correction coefficients may be determined based on experimental or simulation results. The processing device **82** may correct the estimated wind speed by referring to this table. This enables appropriate estimation of wind speed and/or wind direction at the measurement spot even when the multicopter **10** is flying.

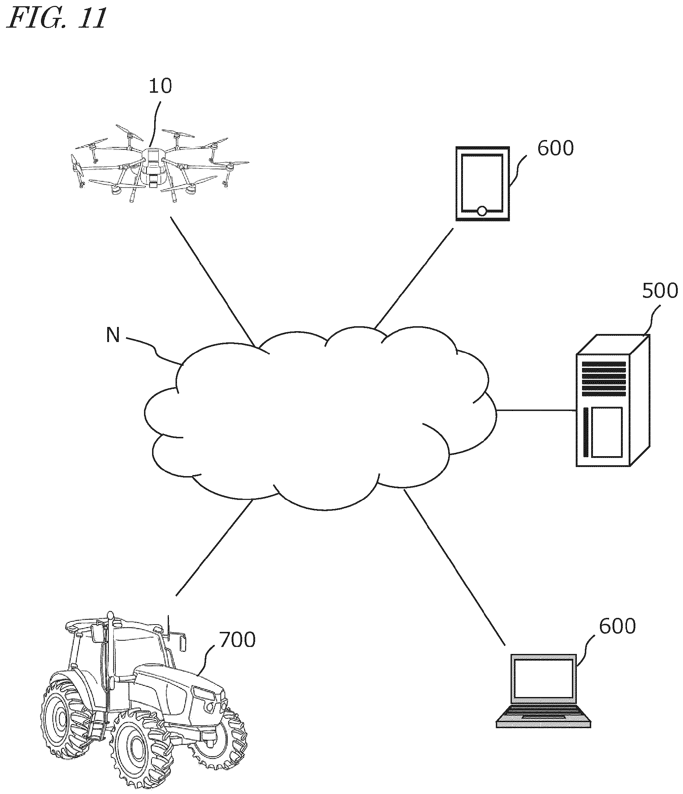

As mentioned earlier, the control device **4a** may include, for example, a flight control device such as a flight controller and a higher-level computer (companion computer). The companion computer may execute the various processes necessary for estimating wind speed and wind direction, and provide flight-related commands based on the results of those processes to the flight controller or wind detection system. Additionally, as shown in FIG. **11****,** some or all of the functions of electronic equipment such as the control device **4a** or the wind detection system mounted on the multicopter **10** may be implemented by one or more servers (computers) **500** or terminal devices (including portable and fixed types) **600** connected to the communication device **4c** of the multicopter **10** via a communication network **N.** An agricultural machine **700** such as a tractor may be connected to this communication network **N,** and communication may be performed between the multicopter **10** and the agricultural machine **700.** Through the communication network **N,** a portion of the data used for processing by the control device **4a** and control signals for the multicopter **10** may be provided to the multicopter **10** from the agricultural machine **700.**

This description discloses the solutions described in the following items.

### [Item 1]

A wind detection system for use in an unmanned aerial vehicle, the wind detection system comprising:
a sensor to detect a first tilt angle of the unmanned aerial vehicle with respect to a first direction perpendicular to a vertical direction, and a second tilt angle of the unmanned aerial vehicle with respect to a second direction that is perpendicular to the vertical direction and intersects the first direction; and
a processing device configured to estimate at least one of wind speed and wind direction based on sensor data output from the sensor indicating the first and second tilt angles.

### [Item 2]

The wind detection system according to Item 1, further comprising a storage device to store a table defining a relationship between the first tilt angle, the second tilt angle, and at least one of the wind speed and the wind direction,
wherein the processing device estimates at least one of the wind speed and the wind direction from the first and second tilt angles detected by the sensor by referring to the table.

### [Item 3]

The wind detection system according to Item 2, wherein the storage device stores the table that varies depending on a shape and a size of a body of the unmanned aerial vehicle.

### [Item 4]

The wind detection system according to Item 2 or 3, wherein the processing device corrects the wind speed estimated by referring to the table according to a flight speed during flight of the unmanned aerial vehicle.

### [Item 5]

The wind detection system according to any one of Items 1 to 4, further comprising a connecting mechanism to suspend an object via a working rope,
wherein the processing device estimates the wind speed around the object according to movement of the object as the object receives wind force when the unmanned aerial vehicle is in the air with the object suspended from the connecting mechanism.

### [Item 6]

The wind detection system according to Item 5, wherein the processing device obtains a third tilt angle of the object with respect to the vertical direction when the unmanned aerial vehicle is in the air with the object suspended from the connecting mechanism, and estimates the wind speed around the object based on the third tilt angle.

### [Item 7]

The wind detection system according to Item 6, wherein the storage device stores the table that further defines a relationship between the first tilt angle, the second tilt angle, the third tilt angle, the wind speed around the unmanned aerial vehicle, and the wind speed around the object.

### [Item 8]

The wind detection system according to Item 7, further comprising a spreader to disperse granular or liquid agricultural materials on a ground, wherein the processing device:
determines the wind speed around the unmanned aerial vehicle and the wind speed around the object from the first tilt angle, the second tilt angle, and the third tilt angle by referring to the table, and
estimates an agricultural material application status of the agricultural materials from the determined wind speed around the unmanned aerial vehicle and the wind speed around the object.

### [Item 9]

The wind detection system according to any one of Items 1 to 8, wherein the first tilt angle is defined by a roll angle of the unmanned aerial vehicle, and the second tilt angle is defined by a pitch angle of the unmanned aerial vehicle.

### [Item 10]

An unmanned aerial vehicle comprising:
a plurality of rotors; and
the wind detection system according to any one of Items 1 to 9.

### INDUSTRIAL APPLICABILITY

The unmanned aerial vehicle according to the present disclosure may be widely utilized not only for aerial photography, surveying, logistics, and agricultural spraying applications but also for ground work related to agriculture, transportation of harvested crops and agricultural materials.

### REFERENCE SIGNS LIST

**2**...rotor (propeller), **3**...rotation drive device, **4**...main body, **4a**...control device, **4b**...sensors, **4c**...communication device, **5**...body frame, **6**...ground station, **7a**...internal combustion engine, **7b**...fuel tank, **8**...electric generator, **9**...power buffer, **10**...multicopter, **12**...rotor, **14**...motor, **16**...ESC, **76**...power supply, **78**...connecting mechanism, **81**...IMU, **82**...processing device, **83**...storage device, **95**...spreader, **98**...working rope, **99**...object, **200**...work machine

## Claims

1. A wind detection system for use in an unmanned aerial vehicle, the wind detection system comprising:
a sensor to detect a first tilt angle of the unmanned aerial vehicle with respect to a first direction perpendicular to a vertical direction, and a second tilt angle of the unmanned aerial vehicle with respect to a second direction that is perpendicular to the vertical direction and intersects the first direction; and
a processing device configured to estimate at least one of wind speed and wind direction based on sensor data output from the sensor indicating the first and second tilt angles.

2. The wind detection system according to Claim 1, further comprising: a storage device to store a table defining a relationship between the first tilt angle, the second tilt angle, and at least one of the wind speed and the wind direction,
wherein the processing device estimates at least one of the wind speed and the wind direction from the first and second tilt angles detected by the sensor by referring to the table.

3. The wind detection system according to Claim 2, wherein the storage device stores the table that varies depending on a shape and a size of a body of the unmanned aerial vehicle.

4. The wind detection system according to Claim 2 or 3, wherein the processing device corrects the wind speed estimated by referring to the table according to a flight speed during flight of the unmanned aerial vehicle.

5. The wind detection system according to any one of Claims 1 to 4, further comprising a connecting mechanism to suspend an object via a working rope,
wherein the processing device estimates the wind speed around the object according to movement of the object as the object receives wind force when the unmanned aerial vehicle is in the air with the object suspended from the connecting mechanism.

6. The wind detection system according to Claim 5, wherein the processing device obtains a third tilt angle of the object with respect to the vertical direction when the unmanned aerial vehicle is in the air with the object suspended from the connecting mechanism, and estimates the wind speed around the object based on the third tilt angle.

7. The wind detection system according to Claim 6, wherein the storage device stores the table that further defines a relationship between the first tilt angle, the second tilt angle, the third tilt angle, the wind speed around the unmanned aerial vehicle, and the wind speed around the object.

8. The wind detection system according to Claim 7, further comprising a spreader to disperse granular or liquid agricultural materials on a ground, wherein the processing device:
determines the wind speed around the unmanned aerial vehicle and the wind speed around the object from the first tilt angle, the second tilt angle, and the third tilt angle by referring to the table; and
estimates an agricultural material application status of the agricultural materials from the determined wind speed around the unmanned aerial vehicle and the wind speed around the object.

9. The wind detection system according to any one of Claims 1 to 8, wherein the first tilt angle is defined by a roll angle of the unmanned aerial vehicle, and the second tilt angle is defined by a pitch angle of the unmanned aerial vehicle.

10. An unmanned aerial vehicle comprising:
a plurality of rotors; and
the wind detection system according to any one of Claims 1 to 9.
